# EUROPEAN PATENT APPLICATION

(11) **EP 2 544 185 A1**
(43) Date of publication of application: **09.01.2013**
(21) Application number: 12173421.4
(22) Date of filing: 25.06.2012
(51) Int. Cl.: G11B 27/11, H04N 21/442, H04N 5/775, G11B 27/10

(54) **Content display device, content output device, and content display method**

(30) Priority: 06.07.2011 JP 2011149659
(71) Applicant: Hitachi Consumer Electronics Co., Ltd., Tokyo (JP)
(72) Inventor: Tashiro, Sakiko, Chiyoda-ku, Tokyo 100-8220 (JP); Sakaniwa, Hidenori, Chiyoda-ku, Tokyo 100-8220 (JP); Matsubara, Takashi, Chiyoda-ku, Tokyo 100-8220 (JP); Nozoe, Takahiko, Chiyoda-ku, Tokyo 100-8220 (JP)
(74) Representative: Calderbank, Thomas Roger

(57) **Abstract**

A content display device (300) includes a content signal input unit (304) that receives a content signal; a display unit (306, 307, 308) that displays content included in the content signal; a sensor (321) that detects a presence/absence of a viewer in a predetermined range; and a reproduction position storing unit (324) that stores reproduction position information indicating a reproduction position of the content. When the sensor (321) detects that a viewer leaves, and then returns to, the predetermined range, the display unit returns to a reproduction position, indicated by the reproduction position information, and displays the content.

## Description

The present invention relates to a technology for displaying and outputting content.

JP-A-2001-84662 discloses a related art of this technical field. This publication describes a reproduction device including reproduction means that reproduces a voice signal recorded on a recording medium, voice output means that outputs voice based on the voice signal reproduced by the reproduction means, detection means that detects whether or not there is a user in the listening area of the voice output by the voice output means, and control means wherein, when the detection means detects that there is no user in the listening area, the control means causes the reproduction means to pause the reproduction of the voice signal and places the reproduction means in the pause state with the reproduction position on the recording medium backspaced the equivalent of a first time and, when the detection means detects that there is a user in the listening area, causes the reproduction means to resume the reproduction of the voice signal (see paragraph [0006] in JP-A-2001-84662).

According to the technology disclosed in JP-A-2001-84662, the reproduction of the voice signal is paused when there is no user in the listening area and the reproduction of the voice signal is resumed when there is a user in the listening area. However, the technology disclosed in JP-A-2001-84662 does not take into consideration the continued reproduction of the voice signal when a user is out of the listening area. Because of this problem, the user sometimes cannot perform intended processing when the user returns to the listening area.

The present application includes multiple means for solving the problems described above. One of them is a content display device including a content signal input unit that receives a content signal; a display unit that displays content included in the content signal; a sensor that detects a presence/absence of a viewer in a predetermined range; and a reproduction position storing unit that stores reproduction position information indicating a reproduction position of the content. When the sensor detects that a viewer leaves, and then returns to, the predetermined range, the display unit returns to a reproduction position, indicated by the reproduction position information, and displays the content.

The present invention enhances the user's ease of use in the content display and output technology.

Other objects, features and advantages of the invention will become apparent from the following description of the embodiments of the invention taken in conjunction with the accompanying drawings.
FIG. 1 is a diagram showing an example of the operation of the automatic power-saving processing function.
FIG. 2 is a diagram showing an example of the operation of the reproduction position control function.
FIG. 3 is a diagram showing an example of the configuration of a content processing device.
FIG. 4 is a diagram showing an example of the processing of a content processing device in a second embodiment.
FIG. 5A is a diagram showing an example of the processing when the user leaves a viewing area in the second embodiment.
FIG. 5B is a diagram showing an example of the processing when the user returns to a viewing area in the second embodiment.
FIG. 6 is a diagram showing an example of the operation of the content processing device in the second embodiment.
FIG. 7 is a diagram showing an example of the processing of a content processing device in a third embodiment.
FIG. 8A is a diagram showing an example of the processing when the user leaves a viewing area in the third embodiment.
FIG. 8B is a diagram showing an example of the processing when the user returns to a viewing area in the third embodiment.
FIG. 9 is a diagram showing an example of the operation of the content processing device in the third embodiment.
FIG. 10 is a diagram showing an example of the operation of the content processing device in the third embodiment.
FIG. 11 is a diagram showing an example of the processing of a content processing device in a fourth embodiment.
FIG. 12A is a diagram showing an example of the processing when the user leaves a viewing area in the fourth embodiment.
FIG 12B is a diagram showing an example of the processing when the user returns to a viewing area in the fourth embodiment.
FIG. 13 is a diagram showing an example of the operation of the content processing device in the fourth embodiment.
FIG. 14A is a diagram showing an example of the configuration of the configuration processing device.
FIG. 14B is a diagram showing an example of the configuration of the configuration processing device.
FIG. 14C is a diagram showing an example of the configuration of the configuration processing device.
FIG. 15 is a diagram showing an example of the screen display.
FIG. 16 is a diagram showing an example of the screen display.
FIG. 17 is a diagram showing an example of the screen display.
FIG. 18 is a diagram showing an example of the processing of a content processing device in a first embodiment.
FIG. 19 is a diagram showing an example of the processing when the user returns to a viewing area in the first embodiment.
FIG. 20 is a diagram showing an example of the operation of the content processing device in the first embodiment.

Embodiments of the present invention will be described with reference to the drawings.

### [First embodiment]

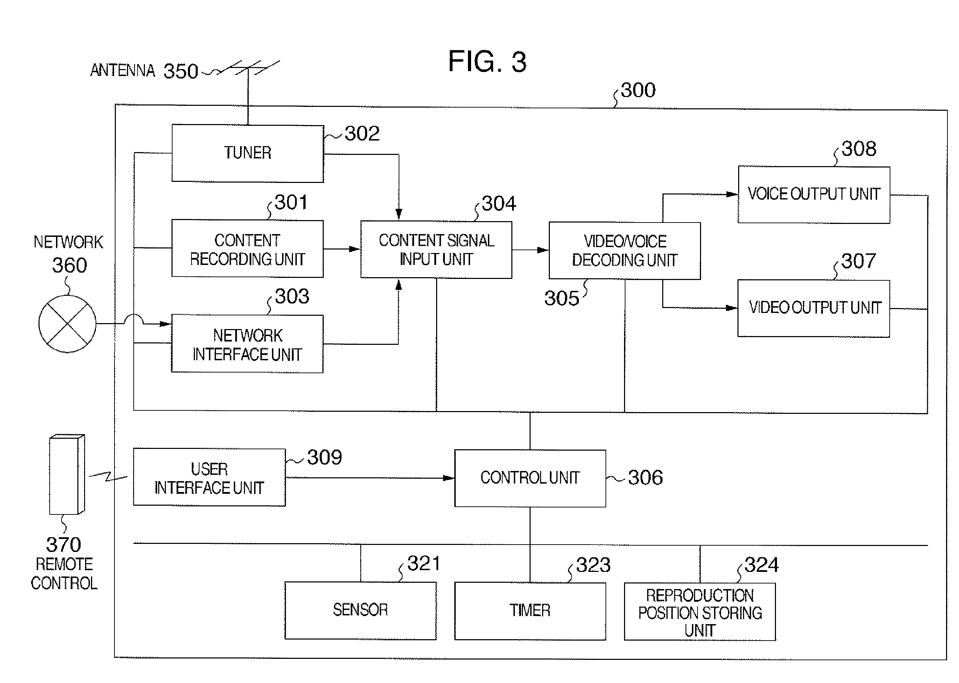

The following describes an example of the configuration of a content processing device 300 in this embodiment with reference to FIG. 3.

A content recording unit 301, configured, for example, by a hard disk drive (HDD) or a semiconductor memory such as a solid state drive (SSD), has a directory configuration and records content on a file basis. In addition, the content recording unit 301 has a structure to allow a user to read content from a specified position according to the user's request.

A tuner 302 is a processing unit for receiving video and voice from a radio, TV, or cable TV (CATV) and data, such as an electronic program guide (EPG), via an antenna 350.

A network interface unit 303 is a processing unit for receiving content from a network 360 such as the Internet, a telephone line, and a local area network (LAN).

A content signal input unit 304 is an interface for receiving content signals, such as video, voice, and text, from the content recording unit 301, tuner 302, and network interface unit 303. The content signal input unit 304 also works as a processing unit for receiving content signals from a player device such as an optical disc or from a game machine.

A video/voice decoding unit 305 decodes content or converts video information and voice information according to a request from a control unit 306 and transmits the resulting video data and voice data respectively to a video output unit 307 and a voice output unit 308.

The control unit 306 controls the content recording unit 301, tuner 302, network interface unit 303, content signal input unit 304, video/voice decoding unit 305, video output unit 307, voice output unit 308, sensor 321, timer 323, and reproduction position storing unit 324, based on the input from a user interface unit 309 or the information from the sensor 321. For example, the control unit 306 performs control to generate the signal of data to be output by the video output unit 307 and the voice output unit 308 and to input the generated signal to the video/voice decoding unit 305. The control unit 306 also controls the content reproduction operation, such as the reproduction processing, pause processing, stop processing, reproduction position jump processing, etc., based on the user operation via the user interface unit 309 or on the resume point information that will be described later. The control unit 306 also performs control to encode content and to record the encoded content in the content recording unit 301. In addition, the control unit 306 manages the content reproduction position (chapter position, number of reproduction frames, reproduction elapsed time from the head of content, etc.).

The video output unit 307 receives decoded video data, image data, and text data from the video/voice decoding unit 305 and outputs them. Examples of hardware configuring the video output unit 307 include a display device, such as a liquid crystal, organic electroluminescence (organic EL), plasma, or light-emitting diode (LED) display device, or an interface that outputs video signal to an external display device.

The voice output unit 308 receives decoded voice data from the video/voice decoding unit 305 and outputs it. Examples of hardware configuring the voice output unit 308 include a speaker or an interface via which the voice signal is output to an external voice output device.

The user interface unit 309, such as a light receiving unit for receiving a signal from a remote control 370 or the operation panel, is an interface capable of accepting an input from the user.

The sensor 321, for example, a motion sensor, a camera sensor, or a microphone sensor, detects the presence/absence of a user in the detecting area and the viewing status, the number of viewers, and viewer's identifications. The types of sensors are not limited to those given above but any other type of sensor capable of detecting the presence of a user may also be used.

The timer 323, provided for managing the time information, has the function to measure the time elapsed from any point in time. The timer 323 is used to provide time information on sensor output values, to measure the absence time of a user, or to control the content reproduction time.

The reproduction position storing unit 324 stores the resume point of content according to the viewing status of a user in the detecting area (area in which the sensor detects the presence/absence of a user) recognized by the sensor 321. Although a resume point is described in this embodiment as the reproduction position information indicating the reproduction position of content, it is also possible to use the mechanism for recording the reproduction position information such as a time code or a chapter.

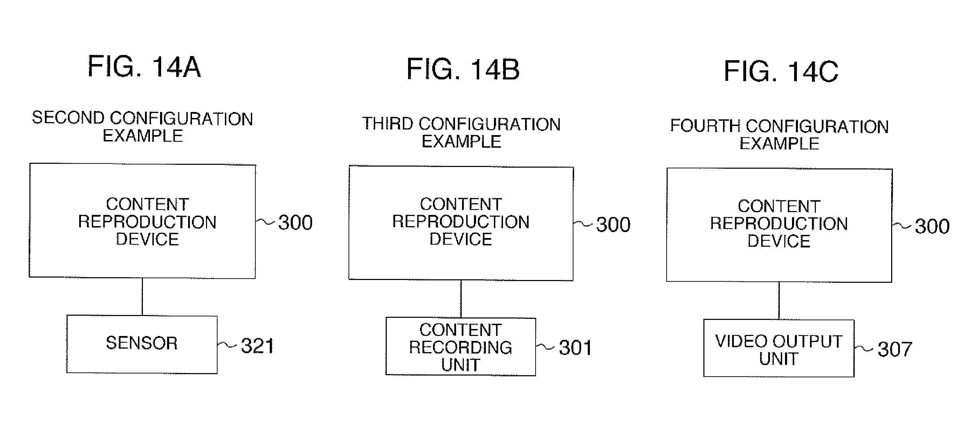

The configuration of the content processing device 300, in which the components described above are independent of each other in the example in FIG. 3, is not limited to this configuration. For example, another configuration is also possible in which one or more central processing units (CPU) work together to perform the processing of the content signal input unit 304, video/voice decoding unit 305, and control unit 306. In addition, though the components are arranged in the content processing device 300 in the example in FIG. 3, one or more components may be provided outside the content processing device 300, for example, as shown in FIGS. 14A, 14B, and 14C and be connected to the content processing device 300 via a network or a universal serial bus (USB). Such a configuration allows a camera, provided separately from the content processing device 300, to be be used as the sensor 321.

Next, the following describes the reproduction position control processing of the content processing device 300 in this embodiment.

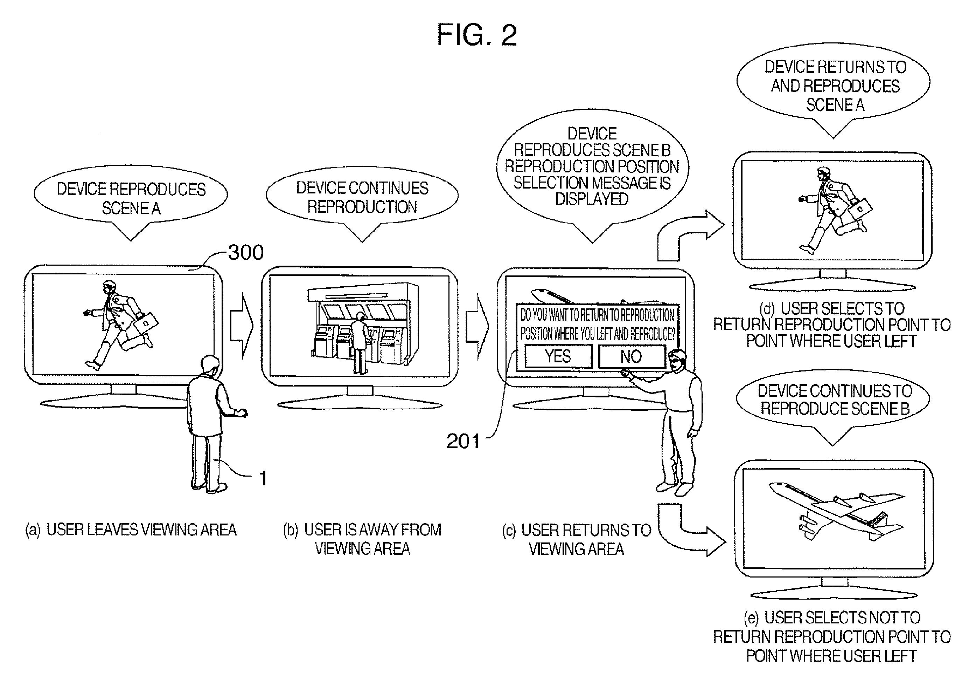

First, an example of the reproduction position control function in this embodiment is described below with reference to FIG. 2.

The reproduction position control function refers to the function that helps a user 1, who is away from (leaves) the viewing area of the content processing device 300 (detecting area of the sensor 321) and then is back (returns) to the viewing area, to return to the reproduction position, where the user 1 left the viewing area, for continued reproduction and display of content. The reproduction position control function increases the convenience of content viewing when the user temporarily leaves and then returns to the viewing area.

For example, the reproduction position control function operates as follows in this embodiment.
(a) of FIG. 2 shows the state in which the user 1 is getting away from (leaving) the viewing area of the content processing device 300. Assume that the content reproduction position at this time is scene A.
(b) of FIG. 2 shows the state during which the user 1 is away from (leaves) the viewing area of the content processing device 300. During this period, the content processing device 300 continues content reproduction.
(c) of FIG. 2 shows the state in which the user 1 is back (has returned) to the viewing area of the content processing device 300. In this case, the content processing device 300 displays a reproduction position selection message 201. An example of the reproduction position selection message 201 is "Do you want to return to reproduction position where you left and reproduce?". The user 1 uses, for example, a remote control to select a response to the message. Assume that the content reproduction position at this time is scene B.
(d) of FIG. 2 shows the state in which the user 1 has selected a response to the reproduction position selection message 201 to return the reproduction position to the position where the user left. In this case, the content processing device 300 returns to scene A, which is the reproduction position where the user left, and reproduces the content.
(e) of FIG. 2 shows the state in which the user I has selected a response to the reproduction position selection message 201 not to return the reproduction position to the position where the user left. In this case, the content processing device 300 continues reproducing the content beginning at scene B.

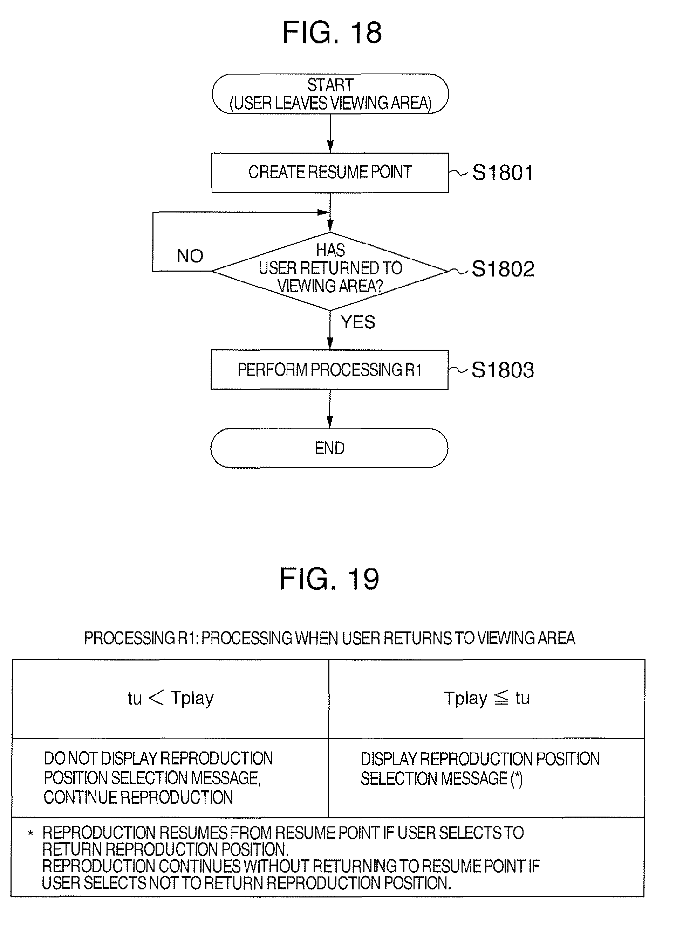

The following describes the flow of the reproduction position control processing in this embodiment with reference to FIG 18.

The processing shown in FIG. 18 begins when the user gets away from (leaves) the viewing area of the content processing device 300.

First, when the content processing device 300 confirms, via sensor 321, that the user has left the viewing area, the reproduction position storing unit 324 creates a resume point in the content, which is being reproduced, in S1801. The resume point refers to a point indicating the reproduction position corresponding to the time, or the time several seconds before the time, the user left the viewing area. The resume point, once created in this way, allows the content processing device 300 to reproduce the content beginning at the reproduction position, where the user left the viewing area, when the user is back (returns) to the viewing area later.

In addition to creating a resume point, the reproduction position storing unit 324 may store the type of the medium from which the content is reproduced. Storing the type of the medium as well as the resume point allows the content processing device 300 to identify the reproduction medium and the reproduction position where the user left the viewing area and then to reproduce the content even when the content processing device 300 can reproduce the content from multiple types of medium.

Although a resume point is used in the example in this embodiment to store a content reproduction position, the mechanism using a time code or a chapter may also be used.

In S1802, the content processing device 300 determines whether the user is back (has returned) to the viewing area of the content processing device 300. If it is confirmed via the sensor 321 that the user has returned to the viewing area, the processing proceeds to S1803; if it is not confirmed that the user has returned to the viewing area (the state in which the user leaves the viewing area continues), the content processing device 300 waits for the user to return to the viewing area.

In S1803, based on the time elapsed from the time the user left the viewing area, which is measured by the timer 323, and on the output screen status when the user has returned to the viewing area, the content processing device 300 performs the processing (processing R1) that is executed when the user returns to the viewing area. The detail of the processing R1, as well as the description of FIG. 19, will be given later. When the processing in S1803 is terminated, the sequence of processing shown in FIG. 18 is completed.

With reference to FIG 19, the following describes an example of the processing (processing R1) that is executed when the user returns to the viewing area in this embodiment.

When the user returns to the viewing area, the content processing device 300 determines the processing content based on the following two factors: tu and Tplay. tu is the time elapsed from the time the user left the viewing area (time for which the user leaves the viewing area) that is measured by the timer 323. Tplay is the predetermined time (the time that elapses from the time the user left the viewing area to the time the reproduction position control function starts the operation. This time is used to determine whether the reproduction position selection message 201 is to be displayed). The control unit 306 controls the output according to the processing content determined in this way and, according to the control, the video output unit 307 displays the data.

The processing content of the processing R1 is classified into the following two.

If the time tu elapsed from the time the user left the viewing area is smaller than Tplay (tu<Tplay), the content processing device 300 does not display the reproduction position selection message 201 described above when the user returns to the viewing area. The content processing device 300 continues to reproduce the content.

If tu is equal to or larger than Tplay (Tplay≤tu), the content processing device 300 displays the reproduction position selection message 201 when the user returns to the viewing area.

The condition for Tplay, if established in this way, eliminates the need for the user to select whether to return the reproduction position, for example, when the user leaves, and immediately returns to, the viewing area.

If the reproduction position selection message 201 is displayed, the control unit 306 controls the content reproduction position based on a selection instruction from the user. For example, if the user responds to the reproduction position selection message 201 via the user interface unit 309 to select "to return" the reproduction position, the control unit 306 performs control to return the content reproduction position to the position indicated by the resume point created in S1801 in FIG. 18. It is also possible for the control unit 306 to return the content reproduction position to the position corresponding to several seconds before the position indicated by the resume point. If the user selects "not to return" the reproduction position, the control unit 306 does not return the reproduction position to the position indicated by the resume point but continues the reproduction. When the user select one of the options, the content processing device 300 terminates the display of the reproduction position selection message 201.

The reproduction position selection message 201 may be kept displayed until the user issues a selection instruction. Instead, the display of the reproduction position selection message 201 may be automatically terminated if the user does not select any of the operations and a predetermined time has elapsed. The automatic termination prevents the reproduction position selection message 201 from being left displayed.

After the display of the reproduction position selection message 201 is terminated automatically, the content processing device 300 may continue to reproduce the content without returning to the position indicated by the resume point or may return the reproduction position to the position indicated by the resume point. Automatically returning the reproduction position to the position indicated by the resume point reduces the user operation.

The resume point created in S1801 in FIG. 18 is erased when the user selects a reproduction position. If the user does not select a reproduction position, the resume point may also be erased when the display of the reproduction position selection message 201 is terminated. The resume point may also be overwritten when the user leaves the viewing area again and a new resume point is created. This processing, if performed, allows the resume point to be updated to a new resume point when the user leaves the viewing area again.

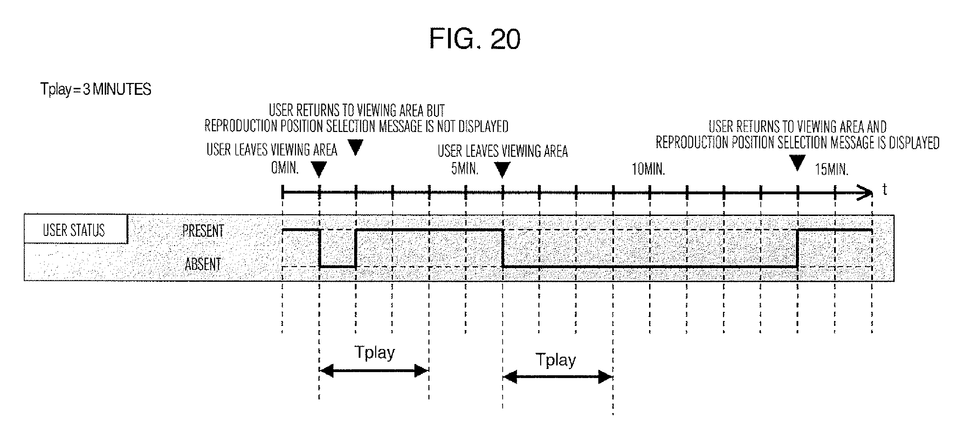

FIG. 20 is a conceptual diagram showing an example of the operation of the content processing device 300 in this embodiment.

In this example, it is assumed that Tplay = three minutes. The user is in either the present state or the absent state. It is assumed that the user leaves the viewing area at t = one minute, returns to the viewing area at t = two minutes, leaves the viewing area at t = six minutes, and returns to the viewing area at t = fourteen minutes.

Because the absent duration is smaller than Tplay (tu<Tplay) at t = two minutes when the user returns to the viewing area for the first time, the content processing device 300 does not display the reproduction position selection message 201. On the other hand, because the time tu elapsed from the time the user left the viewing area is equal to or larger than Tplay (Tplay≤tu) at t = fourteen minutes when the user returns to the viewing area for the second time, the content processing device 300 displays the reproduction position selection message 201.

If the content, which is reproduced while the user leaves the viewing area, reaches the end and the content reproduction automatically stops, the stopped state is maintained. And, iftu is equal to or larger than Tplay (Tplay≤tu) when the user returns to the viewing area, the content processing device 300 displays the reproduction position selection message 201. The content processing device 300 performs this processing to allow the user to resume the content reproduction from the scene the user failed to view even if the content reproduction automatically stops.

When the user pauses the reproduction and then leaves the viewing area, the paused screen may be released when the elapsed time tu from the time the user left the viewing area becomes the predetermined time (for example, Tplay). The content processing device 300 performs this processing to prevent the video from being burnt on the screen. Even if the paused screen is released, the reproduction position selection message 201, when displayed, allows the user to return the reproduction position to the scene displayed at the time the user paused the screen. Under this condition, tu may be the time elapsed from the time the pause operation is performed. By using this time as tu, it is possible to recognize when the user leaves the viewing area, not by the sensor 321, but by the user operation. The processing, which is performed when the user pauses the reproduction and then leaves the viewing area, will be described later.

The reproduction position selection message 201 may also be displayed even when the time tu elapsed from the time the user left the viewing area is smaller than Tplay (tu<Tplay). For example, when the user failed to view an important scene, this processing allows the user to perform an operation to return the reproduction position to a scene already reproduced while the user left the viewing area.

When the user returns to the viewing area, it is also possible for the content processing device 300 not to display the reproduction position selection message 201 but to return the reproduction position automatically to the position indicated by the resume point or to the position several seconds before it. The content processing device 300 performs this processing to eliminate the need for the user to perform the operation but to allow the user to resume content viewing beginning at the reproduction position of the scene the user failed to view.

The embodiment described above improves the content display and output technology to increase the user's ease of use.

When the user returns to the viewing area, the content processing device 300 gives the user the option to select whether or not the reproduction position is to be returned to the scene, which was reproduced when the user left the viewing area, thus enabling the user to determine whether to return the reproduction position. This capability allows the user to return the reproduction position if the scene the user failed to view is important, but not to return the reproduction position if the scene the user failed to view is not important to the user, thus providing more suitable content display and output technology.

### [Second embodiment]

In the first embodiment, the content display and output technology is described that allows the user, who returns to the viewing area, to return the reproduction position to the scene that was reproduced when the user left the viewing area. In the second embodiment, the technology is described in which the automatic power saving processing function is added to the content display and output technology in the first embodiment.

Because the configuration of the device in this embodiment is similar to that of the device in the first embodiment except a part of the configuration, the description similar to that of the first embodiment omitted.

The following describes an example of the configuration of a content processing device 300 in this embodiment with reference to FIG 3.

The control unit 306 controls the automatic power saving processing function that will be described later. For example, the control unit 306 issues an instruction to the video output unit 307 to turn off the power, to stop the video display, or to reduce the brightness of the video display. By doing so, the control unit 306 reduces the power consumption of the device for achieving power saving. Instead of issuing an instruction to the video output unit 307 to turn off the power, to stop the video display, or to reduce the brightness of the video display, the control unit 306 may also achieve power saving by stopping the output of video signals to the video output unit 307. In addition, when the video output unit 307 is configured as an interface via which the video signal and the voice signal are output to an external display device, the control unit 306 may issue an instruction to the a display device, which is the output destination, to turn off the power, to stop the video display, or to reduce the brightness of the video display for achieving power saving.

The video output unit 307 performs the power-off processing, backlight turn-off processing (backlight-off processing), or backlight brightness reduction processing according to the control signal from the control unit 306.

The voice output unit 308 performs the power-off processing or voice volume reduction processing according to the control signal from the control unit 306.

Next, the following describes the automatic power saving processing of the content processing device 300 in this embodiment.

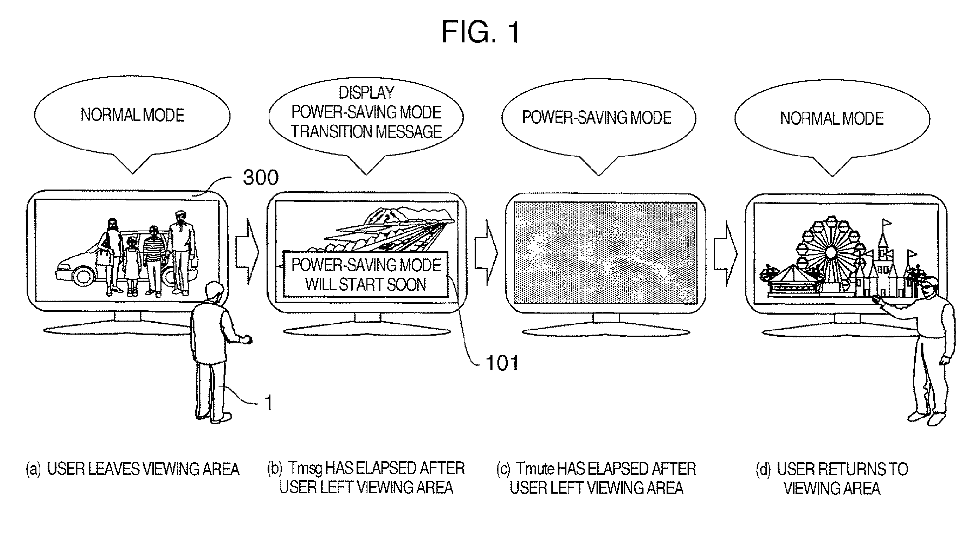

First, an example of the automatic power saving processing function in this embodiment is described with reference to FIG. 1.

The automatic power saving processing function refers to the function that performs the backlight-off processing or brightness reduction processing when the user leaves the viewing area of the content processing device 300 for reducing the power consumption of the content processing device 300.

Tmsg in FIG. 1 is the time from the time the user leaves the viewing area to the time the display of a power-saving mode transition message 101, which will be described later, is started. Tmute is the time from the time the user leaves the viewing area to the time the transition to the power-saving mode is started. The relation between the two is Tmsg≤Tmute. When Tmsg = Tmute, the period of time during which the power-saving mode transition message is displayed is zero. In this case, the screen transits from the "normal mode" directly to the "power-saving mode".
(a) of FIG. 1 shows the state in which the user 1 is getting away from (leaving) the viewing area of the content processing device 300. The status of the content processing device 300 is changed by the automatic power saving function after the user leaves the viewing area. The screen status shown in (a) of FIG. 1 is "normal mode" in which the video and the voice are output in the usual manner.
(b) of FIG 1 shows the state in which the predetermined time Tmsg has elapsed after the user left the viewing area. At this time, the content processing device 300 displays the power-saving mode transition message 101. An example of the content of the power-saving mode transition message 101 is "Power-saving mode will start soon".
(c) of FIG. 1 shows the state in which the predetermined time Tmute (≥Tmsg) has elapsed after the user left the viewing area. At this time, the screen status of the content processing device 300 is switched to "power-saving mode". In "power-saving mode", the screen is, for example, in the "backlight-off' state in which the backlight is turned off to black out the screen or in the "brightness reduction" state in which the display brightness of the screen is reduced to such a level at which the video is still kept visible. In either case, the power consumption is lower than in the "normal mode". In general, the power consumption is higher in the "brightness reduction" state than in the "backlight-off'" state. However, in the "brightness reduction" state, the user is able to recognize that the video is still displayed and therefore less likely to get a false idea that the device has failed.
(d) of FIG. 1 shows the state in which the user 1 is back (has returned) to the viewing area of the content processing device 300. At this time, the screen status of the content processing device 300 is "normal mode" again.

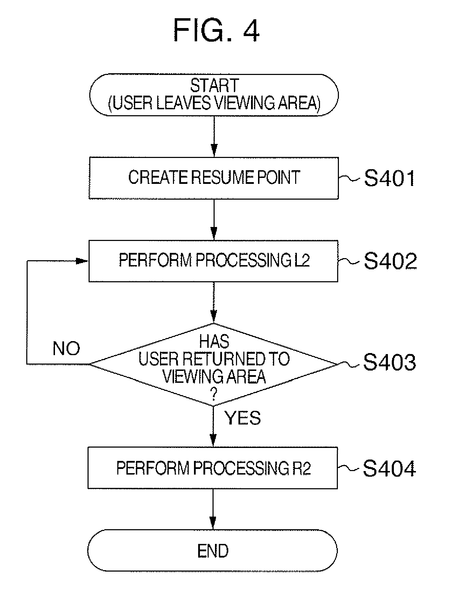

The following describes the flow of the reproduction position control processing in this embodiment with reference to FIG. 4.

The processing shown in FIG. 4 begins when the user gets away from (leaves) the viewing area of the content processing device 300.

First, in S401, when the content processing device 300 confirms, via sensor 321, that the user has left the viewing area, the reproduction position storing unit 324 creates a resume point in the content being reproduced.

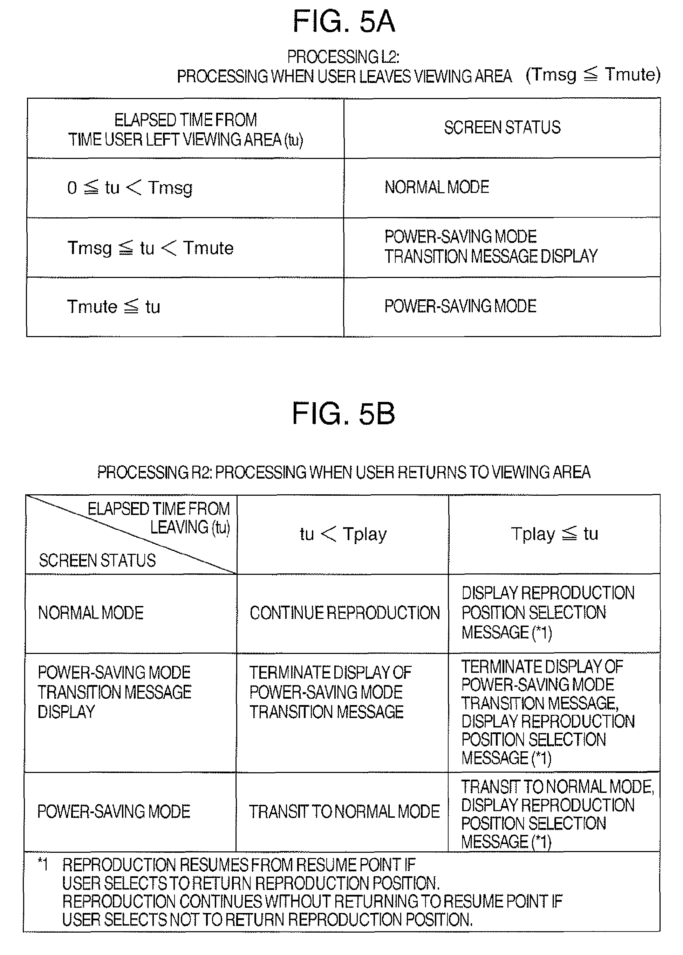

In S402, the content processing device 300 performs the processing (processing L2), provided for execution when the user leaves the viewing area, based on the time tu elapsed from the time the user left the viewing area. The time tu is measured by the timer 323. The detail of the processing L2 will be described later in conjunction with FIG 5A. After the processing in S402 is terminated, the processing proceeds to S403.

In S403, the content processing device 300 determines whether the user is back (has returned) to the viewing area of the content processing device 300. If it is confirmed via the sensor 321 that the user has returned to the viewing area, the processing proceeds to S404; if it is not confirmed that the user has returned to the viewing area (the state in which the user leaves the viewing area continues), the processing returns to S402.

In S404, based on the time tu elapsed from the time the user left the viewing area and on the output status when the user has returned to the viewing area, the content processing device 300 performs the processing (processing R2) provided for execution when the user returns to the viewing area. The time tu is measured by the timer 323. The detail of the processing R2 will be described later in conjunction with FIG. 5B. When the processing in S404 is terminated, the sequence of processing shown in FIG. 4 is completed.

With reference to FIGS. 5A and 5B, the following describes an example of the processing (processing L2) that is executed when the user leaves the viewing area, and an example of the processing (processing R2) that is executed when the user returns to the viewing area, in this embodiment.

FIG 5A is a diagram showing an example of the processing (processing L2), which is performed when the user leaves the viewing area, for determining the screen status based on the time tu elapsed from the time the user left the viewing area. This elapsed time tu is measured by the timer 323. The control unit 306 controls the output according to the screen status determined by this processing and, according to the control determined in this way, the video output unit 307 displays the data.

The processing content of the processing L2 is classified into the following three.

When tu satisfies the relation 0≤tu≤Tmsg, the screen status is "normal mode".

When tu satisfies the relation Tmsg≤tu<Tmute, the screen status is the state in which the power-saving mode transition message 101 is displayed.

When tu satisfies the relation Tmute≤tu, the screen status is "power-saving mode".

FIG. 5B is a diagram showing an example of the processing (processing R2), which is performed when the user returns to the viewing area, for determining the processing content based on the time tu elapsed from the time the user left the viewing area, which is measured by the timer 323, and on the screen status when the user returns to the viewing area. The control unit 306 controls the output according to the processing content determined by this processing and, according to the determined control, the video output unit 307 displays the data.

The processing content of the processing R2 is classified into the following six.

Tplay is the predetermined time (time from the time the user leaves the viewing area to the time the reproduction position control function is started. This time is used to determine whether or not the reproduction position selection message 201 is to be displayed). When the elapsed time tu elapsed from the time the user leaves the viewing area is smaller than Tplay (tu<Tplay), the reproduction position selection message 201 is not displayed regardless of the screen status.

When tu satisfies the relation tu<Tplay and the screen status is "normal mode", no processing is performed and the content reproduction continues.

When tu satisfies the relation Tplay≤tu and the screen status is "normal mode", the reproduction position selection message 201 is displayed.

When tu satisfies the relation tu<Tplay and the screen status is the state in which the power-saving mode transition message 101 is displayed, the display of the power-saving mode transition message 101 is terminated.

When tu satisfies the relation Tplay≤tu and the screen status is the state in which the power-saving mode transition message 101 is displayed, the display of the power-saving mode transition message 101 is terminated and the reproduction position selection message 201 is displayed.

When tu satisfies the relation tu<Tplay and the screen status is "power-saving mode", the screen transits to "normal mode".

When tu satisfies the relation Tplay≤tu and the screen status is "power-saving mode", the screen transits to "normal mode" and the reproduction position selection message 201 is displayed.

Because the other configuration and effect are similar to those of the processing R1 in the first embodiment, the description is omitted here.

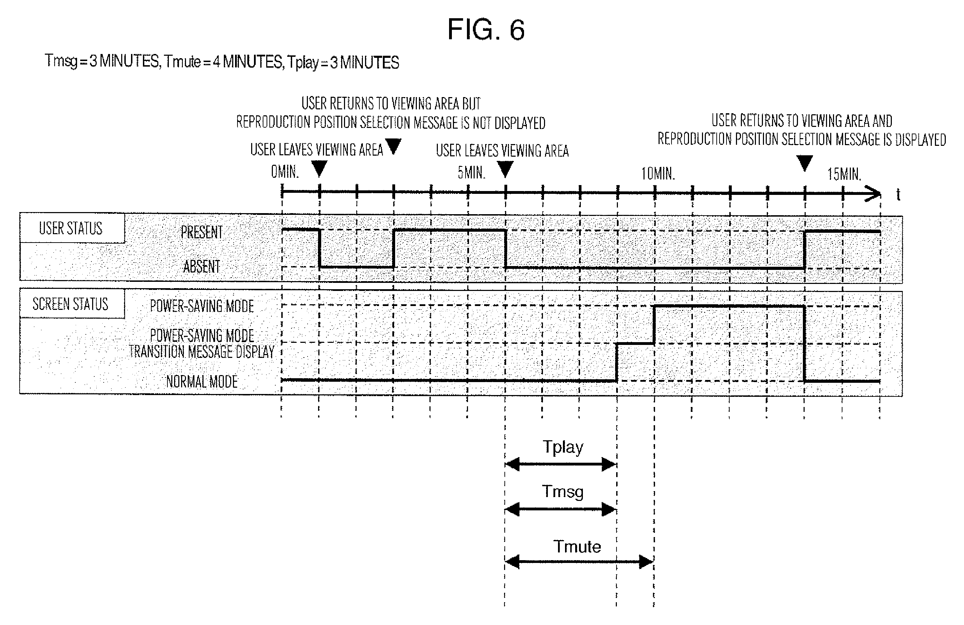

FIG. 6 is a conceptual diagram showing an example of the operation of the content processing device 300 in this embodiment.

In this example, it is assumed that Tmsg = three minutes, Tmute = four minutes, and Tplay = three minutes. The user is in either the present state or the absent state. It is assumed that the user leaves the viewing area at t = one minute, returns to the viewing area at t = three minutes, leaves the viewing area at t = six minutes, and returns to the viewing area at t = fourteen minutes.

The screen status is one of the following three: "normal mode", "power-saving mode transition message display", and "power-saving mode". Under the assumption above, the power-saving mode transition message 101 is displayed at t = nine minutes that is the time at which Tmsg has elapsed after the user left the viewing area for the second time. The screen transits to "power-saving mode" at t = ten minutes that is the time at which Tmute has elapsed after the user left the viewing area for the second time. In addition, the screen transits to "normal mode" at t = fourteen minutes that is the time at which the user returns to the viewing area for the second time.

Because the absent duration tu is smaller than Tplay (tu<Tplay) at t = three minutes that is the time at which the user returns to the viewing area for the first time, the reproduction position selection message 201 is not displayed. On the other hand, because the absent duration tu is equal to or larger than Tplay (Tplay≤tu) at t = fourteen minutes that is the time at which the user returns to the viewing area for the second time, the reproduction position selection message 201 is displayed.

Because the other configuration and effect are similar to those of the first embodiment, the description is omitted here.

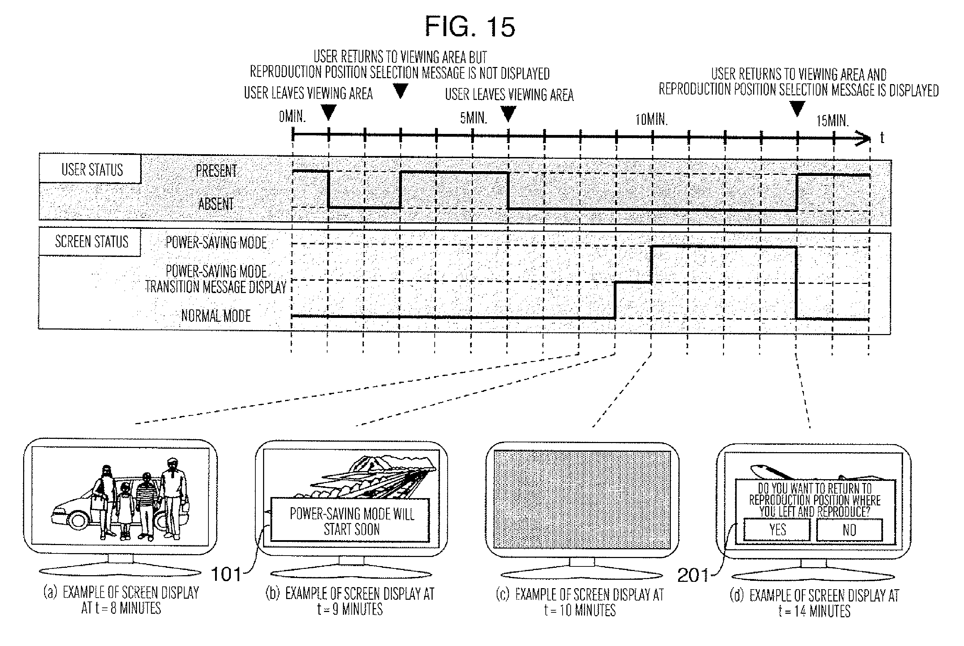

FIG. 15 is a diagram showing an example of the screen display status when the content processing device 300 performs the operation as shown in FIG. 6 in this embodiment.

At t = eight minutes, the screen status is "normal mode" and the content processing device 300 displays the screen such as the one shown in (a) of FIG. 15.

At t = nine minutes, the screen transits from "normal mode" to the state, in which the power-saving mode transition message 101 is displayed, and the content processing device 300 displays the screen such as the one shown in (b) of FIG. 15.

At t = ten minutes, the screen transits from the state, in which the power-saving mode transition message 101 is displayed, to "power-saving mode" and the content processing device 300 displays the screen such as the one shown in (c) of FIG. 15.

At t = fourteen minutes, the screen transits from "power-saving mode" to "normal mode" and, at the same time, the content processing device 300 displays the screen such as the one shown in (d) of FIG. 15 with the reproduction position selection message 201 on the screen.

If the value of Tmute and the value of Tplay differ when both automatic power-saving processing function and the reproduction position control function are operated as in this embodiment, the time from the time the user leaves the viewing area to the time the screen transits to "power-saving mode" differs from the time from the time the user leaves the viewing area to the time the reproduction position control function starts the operation (the time used to determine whether the reproduction position selection message 201 is to be displayed). To address this problem, it is possible to automatically adjust one or both of Tmute and Tplay when Tmute ≠ Tplay to make their values equal. This processing allows the content processing device 300 to carry out one of the two patterns. In one pattern, if the absent duration tu is smaller than Tmute, the screen does not transit to "power-saving mode" and the content processing device 300 does not display the reproduction position selection message 201 after the user returns to the viewing area. In the other pattern, if the absent duration tu is equal to or larger than Tmute, the screen transits to "power-saving mode" and the content processing device 300 displays the reproduction position selection message 201 after the user returns to the viewing area. This automatic adjustment makes it easy for the user to understand the operation of the content processing device 300.

The above-described embodiment achieves the same effect in the content display and output technology as the first embodiment.

With addition of the automatic power-saving processing function, this embodiment performs the backlight-off processing or the brightness reduction processing when the user leaves the viewing area to reduce the power consumption of the device, In this case, too, this embodiment displays the reproduction position selection message 201 as necessary to increase the user convenience, thus providing a better content display and output technology.

### [Third embodiment]

In the second embodiment, the content display and output technology is described in which the reproduction position control function and the automatic power-saving processing function are added. In a third embodiment, the content display and output technology is described that allows the user to perform the pause operation during content reproduction. In this embodiment, the reproduction position, corresponding to the position at which the user perfor-ms the pause operation, is stored in the reproduction position storing unit 324 as the reproduction position information indicating the content reproduction position. The reproduction position, corresponding to several seconds before the position at which the pause operation is performed, may also be stored.

Because the configuration of the device in this embodiment is similar to that of the device in the first and second embodiments except a part of the configuration, the description similar to that in the first and the second embodiments is omitted.

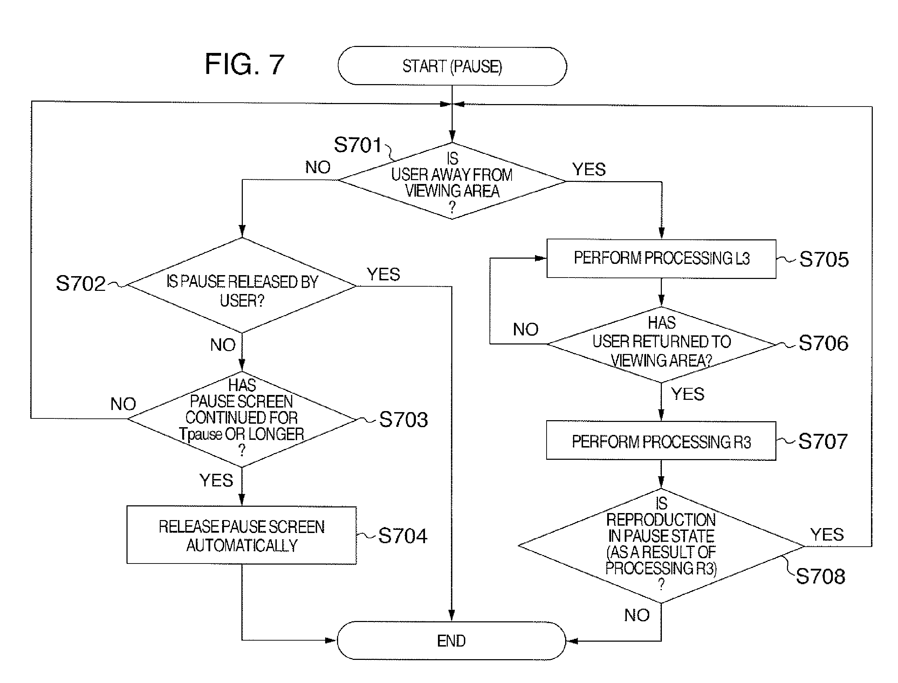

The following describes an example of the processing flow of a content processing device 300 in this embodiment with reference to FIG. 7.

The processing shown in FIG. 7 begins when the user performs the pause operation via the user interface unit 309.

First, in S701, the content processing device 300 determines whether the user is away from (leaves) the viewing area of the content processing device 300. If it is confirmed via the sensor 321 that the user leaves the viewing area, the processing proceeds to S705; if it is not confirmed that the user leaves the viewing area (the state in which the user is present continues), the processing proceeds to S702.

In S702, the content processing device 300 determines whether the user performs the pause release operation. If the release of the pause is not confirmed by the video/voice decoding unit 305 and the user interface unit 309 (the pause state continues), the processing proceeds to S703. If the release of the pause is confirmed, the content processing device 300 terminates the sequence of processing in FIG. 7.

In S703, the content processing device 300 determines if the pause state continues for the predetermined period Tpause or longer. Tpause is the period of time from the start of the pause to the release of the pause screen. Controlling the screen status so that the pause screen will not be output continuously for Tpause or longer prevents the video from being burnt on the screen. If it is determined by the video/voice decoding unit 305 and the timer 323 that the pause state has continued for Tpause or longer, the processing proceeds to S704. If it is confirmed that the Tpause has not yet continued for Tpause or longer, the processing returns to S701.

In S704, the content processing device 300 releases the pause screen via the video/voice decoding unit 305 and terminates the sequence of processing in FIG. 7. For example, the pause screen is released when the content reproduction resume processing or the content stop processing is performed.

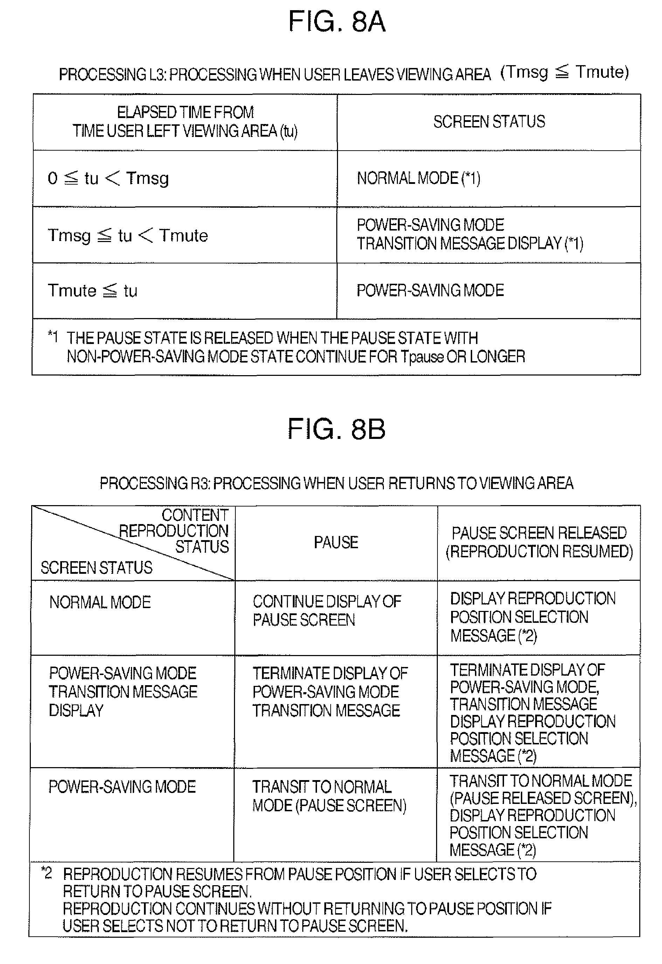

In step S705, the content processing device 300 performs the processing (processing L3), provided for execution when the user leaves the viewing area, based on the time tu elapsed after the user left the viewing area. The time tu is measured by the timer 323. The detail of the processing L3 will be described later in conjunction with FIG. 8. After the processing in S705 is terminated, the processing proceeds to S706.

In S706, the content processing device 300 determines whether the user is back (has returned) to the viewing area of the content processing device 300. If it is confirmed via the sensor 321 that the user has returned to the viewing area, the processing proceeds to S707; if it is not confirmed that the user has returned to the viewing area (the state in which the user leaves the viewing area continues), the processing returns to S705.

In S707, based on the content reproduction status when the user returns to the viewing area and on the screen status when the user returns to the viewing area, the content processing device 300 performs the processing (processing R3) provided for execution when the user returns to the viewing area. The detail of the processing R3 will be described later in conjunction with FIG. 8. When the processing in S707 is terminated, the processing proceeds to S708.

In S708, the content processing device 300 determines whether the content reproduction status, created as a result of the processing R3, is the pause state. If it is confirmed, via the video/voice decoding unit 305, that the content reproduction status is the pause state, the processing returns to S701. If it is confirmed that the status is not the pause state, the content processing device 300 terminates the sequence of processing shown in FIG. 7.

With reference to FIGS. 8A and 8B, the following describes an example of the processing (processing L3) that is executed when the user leaves the viewing area, and an example of the processing (processing R3) that is executed when the user returns to the viewing area, in this embodiment.

FIG. 8A is a diagram showing an example of the processing (processing L3), which is performed when the user leaves the viewing area, for determining the screen status based on the time tu elapsed from the time the user leaves the viewing area. This elapsed time tu is measured by the timer 323. The control unit 306 controls the output according to the screen status determined by this processing and, according to the control determined in this way, the video output unit 307 displays the data.

The processing content of the processing L3 is classified into the following three.

Tmsg in FIG. 8 is the time from the time the user leaves the viewing area to the time the display of a power-saving mode transition message 101 is started. Tmute is the time from the time the user leaves the viewing area to the time the transition to the "power-saving mode" is started. The relation between the two is Tmsg≤Tmute.

When Tmsg = Tmute, the period of time during which the power-saving mode transition message 101 is displayed is zero. In this case, the screen transits from "normal mode" directly to "power-saving mode".

When tu satisfies the relation 0≤tu<Tmsg, the screen status is "normal mode".

When tu satisfies the relation Tmsg≤tu<Tmute, the screen status is the state in which the power-saving mode transition message 101 is displayed.

When tu satisfies the relation Tmute≤tu, the screen is "power-saving mode".

In addition, when it is confirmed, via the video/voice decoding unit 305 and the timer 323, that the pause state continues for Tpause or longer during the processing L3, the video/voice decoding unit 305 releases the pause screen.

FIG 8B is a diagram showing an example of the processing (processing R3), which is performed when the user returns to the viewing area, for determining the processing content based on the pause state when the user returns to the viewing area and on the screen status when the user returns to the viewing area. The control unit 306 controls the output according to the processing content determined by this processing and, according to the determined control, the video output unit 307 displays the data.

When the time tu elapsed from the time the user left the viewing area is shorter than Tpause, the content processing device 300 does not display the reproduction position selection message 201 regardless of the screen status.

The processing content of the processing R3 is classified into the following six.

When the content reproduction status is the pause state (returns to the viewing area before Tpause elapses) and the screen status is "normal mode" (pause screen), no processing is performed and the display of the pause screen continues.

When the content reproduction status is the pause screen released state (returns to the viewing area when or after Tpause elapses) and therefore the reproduction of the content is resumed and the screen status is "normal node", the reproduction position selection message 201 is displayed.

When the content reproduction status is the pause state (returns to the viewing area before Tpause elapses) and the screen status is the state in which the power-saving mode transition message 101 is displayed, the display of the power-saving mode transition message is terminated and the pause screen is displayed.

When the content reproduction status is the pause screen released state (returns to the viewing area when or after Tpause elapses) and therefore the reproduction of the content is resumed and the screen status is the state in which the power-saving mode transition message 101 is displayed, the display of the power-saving mode transition message 101 is terminated and the reproduction position selection message 201 is displayed.

When the content reproduction status is the pause state (returns to the viewing area before Tpause elapses) and the screen status is "power-saving mode", the screen transits to "normal mode" (the screen returns from "power-saving mode" and the pause screen is displayed).

When the content reproduction status is the pause screen released state (returns to the viewing area when or after Tpause elapses) and therefore the reproduction of the content is resumed and the screen status is "power-saving mode", the screen transits to "normal mode" and the reproduction position selection message 201 is displayed.

As described above, when the user leaves, but returns immediately to, the viewing area, the content processing device 300 references Tpause to determine whether the time indicated by Tpause has elapsed. This processing eliminates the need for the user to select whether to return the reproduction position to the position indicated by the reproduction position information (position where the pause operation was performed).

As in the first and second embodiments, Tplay may also be used to determine whether to display the reproduction position selection message 201.

When the pause screen is released by the content stop processing, the pause screen may be displayed when the user returns to the viewing area. Displaying the pause screen in this way allows the user, who returns to the viewing area, to return to the pause screen without having to perform the operation.

When the reproduction position selection message 201 is displayed, the control unit 306 controls the reproduction position based on a selection instruction from the user. If the user selects to "return" to the reproduction position in response to the reproduction position selection message 201 via the user interface unit 309, the control unit 306 returns the reproduction position to the position indicated by the reproduction position information. The control unit 306 may return the reproduction position to the position several seconds before it. If the user selects "not to return" the reproduction position, the control unit 306 continues reproduction without returning to the position at which the reproduction paused.

When the user selects one of the selection operations, the display of the reproduction position selection message 201 is terminated. The content of the reproduction position selection message 201 is, for example, "Do you want to return to position where you paused and reproduce?" to make the message different from that when the user leaves the viewing area without a pause.

After the display of the reproduction position selection message 201 is terminated automatically, the reproduction may be continued without returning to the reproduction position where the user paused or the reproduction position may be returned to the reproduction position where the user paused. Automatically returning the reproduction position to the reproduction position where the pause processing was performed reduces the user operation.

Because the other configuration and effect are similar to those of the processing R1 in the first embodiment and the processing R2 in the second embodiment, the description is omitted here.

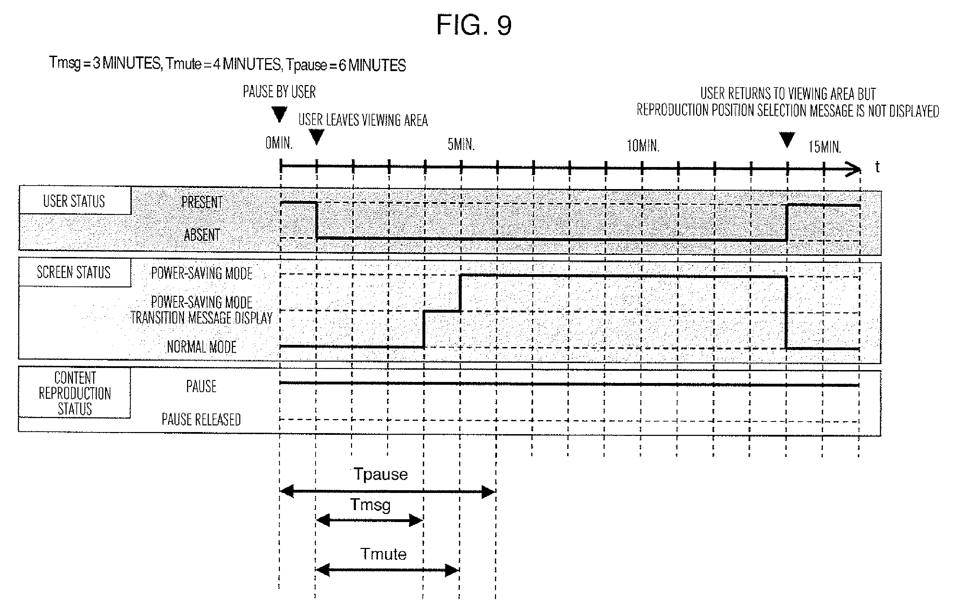

FIG. 9 is a conceptual diagram showing an example of the operation of the content processing device 300 in this embodiment.

In this example, it is assumed that Tmsg = three minutes, Tmute = four minutes, and Tpause = six minutes. The pause screen is not released but transits to "power-saving mode" (backlight-off processing). The user is in either the present state or the absent state. It is assumed that the user leaves the viewing area at t = one minute, returns to the viewing area at t = fourteen minutes and that the user performs the pause operation at t = zero minute.

The screen status is one of the following three: "normal mode", "power-saving mode transition message display", and "power-saving mode". Under the assumption above, the power-saving mode transition message 101 is displayed at t = four minutes that is the time at which Tmsg has elapsed after the user left the viewing area. The screen transits to "power-saving mode" (backlight-off processing) at t = five minutes that is the time at which Tmute has elapsed after the user left the viewing area. In addition, the screen transits to "normal mode" (pause screen) at t = fourteen minutes that is the time at which the user returns to the viewing area.

The content reproduction status is one of the two: "pause" and "pause released". Under the assumption above, because the screen transits to "power-saving mode" (backlight-off processing) before Tpause elapses, neither the video is burnt on the screen nor the pause screen is automatically released. In "power-saving mode" (brightness reduction processing), the pause screen is released at t = six minutes to prevent the video from being burnt on the screen.

Under the assumption above, because the pause still continues at t = fourteen minutes that is the time at which the user returns to the viewing area, the reproduction position selection message 201 is not displayed.

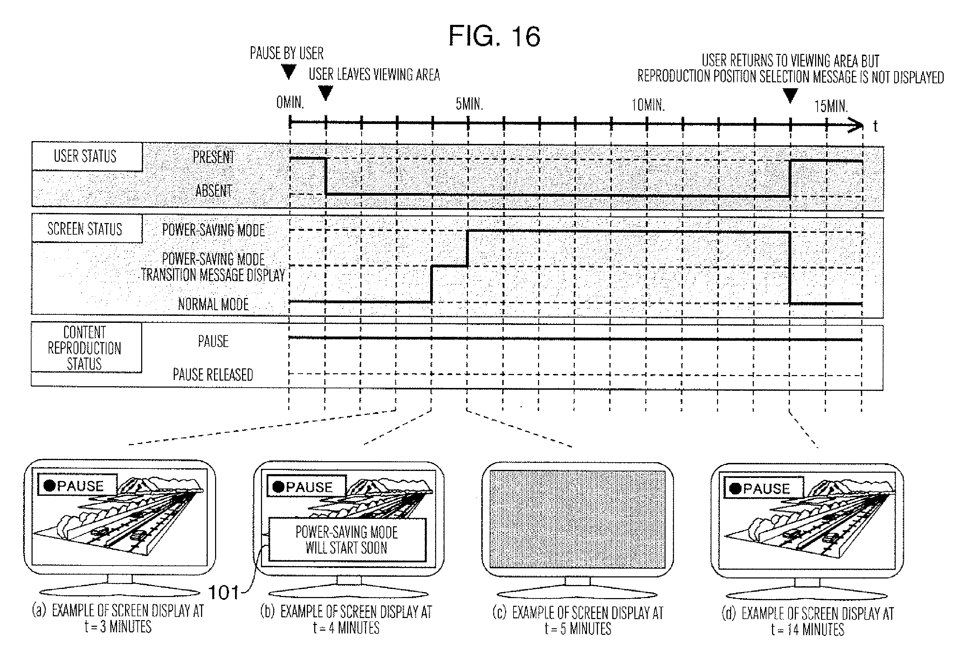

FIG. 16 is a diagram showing an example of the screen display when the content processing device 300 operates as shown in FIG. 9 in this embodiment.

When t = three minutes, the screen status is "normal mode" and the content reproduction status is the pause state, the content processing device 300 performs the screen display processing as shown in (a) of FIG. 16.

When t = four minutes, the screen transits to the state in which power-saving mode transition message 101 is displayed with the content reproduction status remaining in the pause state and the content processing device 300 performs the screen display processing as shown in (b) of FIG. 16.

When t = five minutes, the screen transits to "power-saving mode" with the content reproduction status remaining in the pause state and the content processing device 300 performs the screen display processing as shown in (c) of FIG. 16.

When t = fourteen minutes, the screen transits to "normal mode" with the content reproduction status remaining in the pause state and the content processing device 300 performs the screen display processing as shown in (d) of FIG. 16.

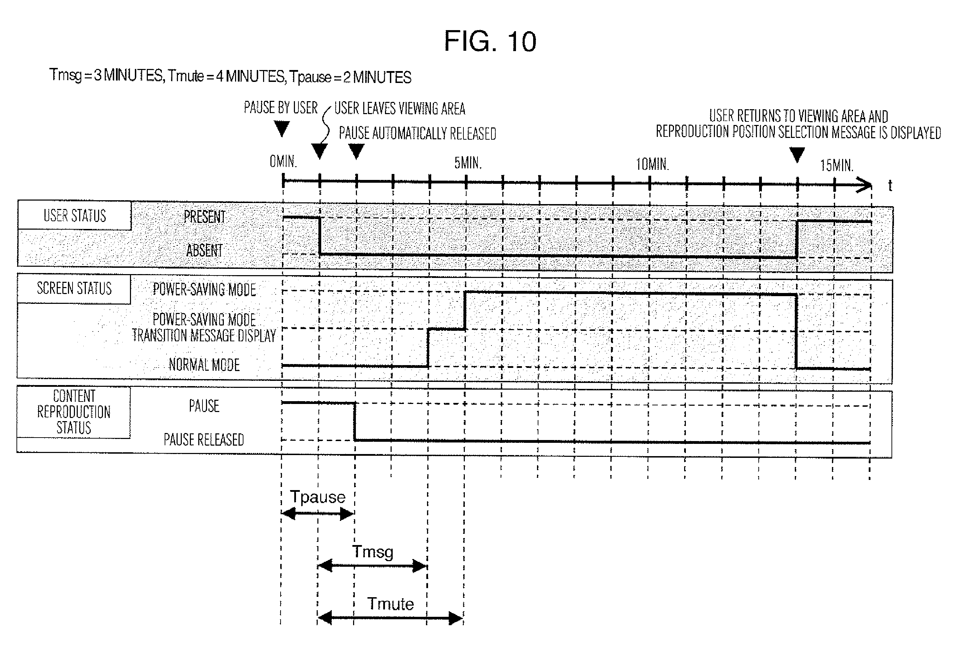

FIG. 10 is a conceptual diagram showing an example of the operation of the content processing device 300 in this embodiment.

In this example, it is assumed that Tmsg = three minutes, Tmute = four minutes, and Tpause = two minutes. In this example, the pause screen is released, the reproduction of content is resumed and, after that, the screen transits to "power-saving mode", The user is in either the absent state or the present state. It is assumed that the user leaves the viewing area at t = one minute, returns to the viewing area at t = fourteen minutes and that the user performs the pause operation at t = zero minute. This user behavior is the same as that in FIG. 9.

The screen status is one of the following three: "normal mode", "power-saving mode transition message display", and "power-saving mode". Under this assumption, the power-saving mode transition message 101 is displayed at t = four minutes that is the time at which Tmsg has elapsed after the user left the viewing area. The screen transits to "power-saving mode" at t = five minutes that is the time at which Tmute has elapsed after the user left the viewing area. In addition, the screen transits to "normal mode" at t = fourteen minutes that is the time at which the user returns to the viewing area.

The content reproduction status is one of the two: "pause" and "pause released". Under this assumption, because the duration of the pause state reaches Tpause at t = two minutes, the pause screen is released automatically and the reproduction of content is resumed-At t = fourteen minutes that is the time at which the user returns to the viewing area, the pause screen is already released and the reproduction position selection message 201 is displayed.

If the pause screen is released when the content stop processing is performed, the screen need not transit to "power-saving mode" at t = five minutes. The power consumption may be reduced even if the screen does not transit to "power-saving mode".

If "power-saving mode" is implemented by the power-off processing, the reproduction position selection message 201 need not be displayed. The redundant display of the reproduction position selection message 201 is prevented when the screen transits to "power-saving mode" immediately after Tpause has elapsed.

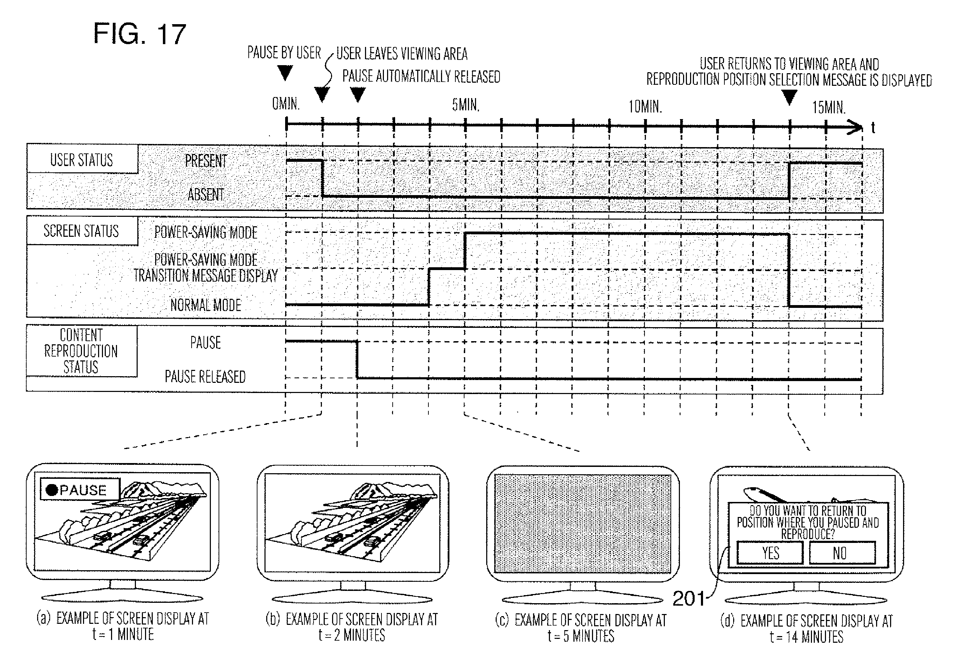

FIG. 17 is a diagram showing an example of the screen display when the content processing device 300 operates as shown in FIG. 10 in this embodiment.

When t = one minute, the screen status is "normal mode" and the content reproduction status is the pause state, and the content processing device 300 performs the screen display processing as shown in (a) of FIG. 17.

When t = two minutes, the pause screen is released automatically and the content processing device 300 performs the screen display processing as shown in (b) of FIG. 17.

When t = five minutes, the screen transits to "power-saving mode" with the pause screen released and the content processing device 300 performs the screen display processing as shown in (c) of FIG 17.

When t = fourteen minutes, the screen transits to "normal mode" with the pause screen released and the content processing device 300 displays the reproduction position selection message 201 and performs the screen display processing as shown in (d) of FIG. 17.

Although tu is the time elapsed from the time the user leaves the viewing area in this embodiment, tu may also be the time elapsed from the time the pause operation is performed. By using this time as tu, it is possible to recognize when the user leaves the viewing area, not by the sensor 321, but by the user operation.

The above-described embodiment achieves the same effect in the content display and output technology as the first and second embodiments.

This embodiment does not output paused video for Tpause or longer even when the user performs the pause operation and then leaves the viewing area. This prevents the video from being burnt on the screen, thus providing a better content display and output technology.

### [Fourth embodiment]

In the third embodiment, the content display and output technology is described in which the user performs the pause operation during the reproduction of content. In the third embodiment, Tmsg and Tmute are times each elapsed from the time the user leaves the viewing area. In a fourth embodiment, the content display and output technology is described in which Tmsg and Tmute are times each elapsed from the time when a pause is released (at the time Tpause has elapsed).

Because the configuration of the device in this embodiment is similar to that of the device in the first to third embodiments except a part of the configuration, the description similar to that in the first to third embodiments is omitted.

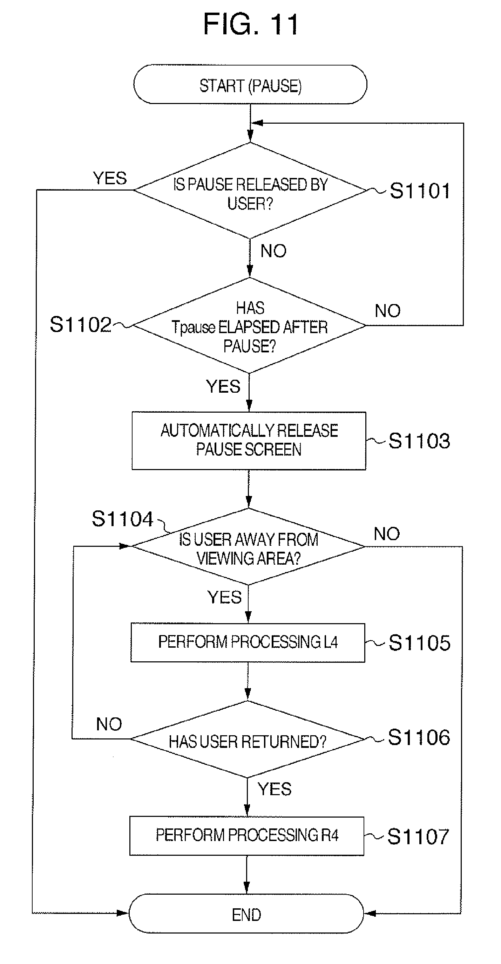

The following describes an example of the processing flow of a content processing device 300 in this embodiment with reference to FIG. 11.

The processing shown in FIG. 11 begins when the user performs the pause operation via the user interface unit 309.

First, in S1101, the content processing device 300 determines whether the user performs the operation to release the pause. If the release of the pause is not confirmed by the video/voice decoding unit 305 and the user interface unit 309 (the pause state continues), the processing proceeds to S1102. If the release of the pause is confirmed, the content processing device 300 terminates the sequence of processing shown in FIG. 11.

In S1102, the content processing device 300 determines whether the pause state has continued for the predetermined period Tpause or longer. If it is confirmed by the video/voice decoding unit 305 and the timer 323 that the pause state has continued for Tpause or longer, the processing proceeds to S1103. If it is confirmed that the pause state has not continued for T pause or longer, the processing returns to S1101.

In S1103, the video/voice decoding unit 305 releases the pause screen. For example, the pause screen is released when the content reproduction resume processing or the content stop processing is performed.

In S1104, the content processing device 300 determines whether the user gets away from (leaves) the viewing area of the content processing device 300. If it is confirmed via the sensor 321 that the user leaves the viewing area, the processing proceeds to S1105. If it is not confirmed that the user leaves the viewing area (the user present state continues), the content processing device 300 terminates the sequence of the processing shown in FIG. 11.

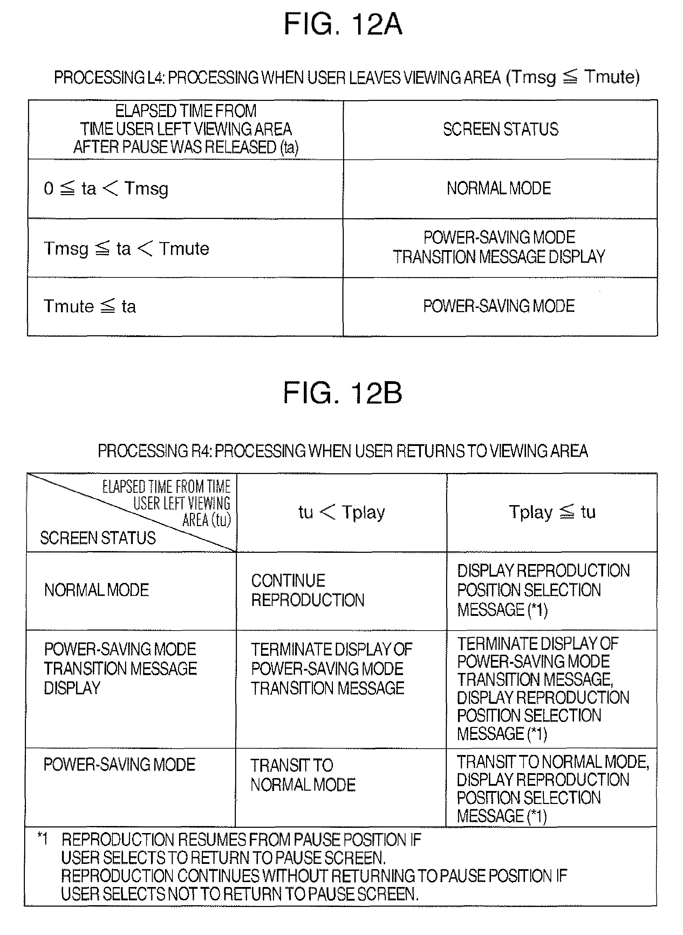

In step S1105, the content processing device 300 performs the processing (processing L4), provided for execution when the user leaves the viewing area, based on the time ta elapsed after the user left the viewing area after the release of the pause. The time ta is measured by the timer 323. The detail of the processing L4 will be described later in conjunction with FIG. 12. After the processing in S1105 is terminated, the processing proceeds to S1106.

In S1106, the content processing device 300 determines whether the user is back (has returned) to the viewing area of the content processing device 300. If it is confirmed via the sensor 321 that the user has returned to the viewing area, the processing proceeds to S1107; if it is not confirmed that the user has returned to the viewing area (the state in which the user leaves the viewing area continues), the processing returns to S1104.

In S1107, based on the time tu measured by the timer 323 and elapsed from the time the user left the viewing area and on the screen status when the user returns to the viewing area, the content processing device 300 performs the processing (processing R4) provided for execution when the user returns to the viewing area. The detail of the processing R4 will be described later in conjunction with FIG. 12. When the processing in S1107 is terminated, the content processing device 300 terminates the sequence of processing shown in FIG. 11.

With reference to FIGS. 12A and 12B, the following describes an example of the processing (processing L4) that is executed when the user leaves the viewing area, and an example of the processing (processing R4) that is executed when the user returns to the viewing area, in this embodiment.

FIG. 12A is a diagram showing an example of the processing (processing L4), which is performed when the user leaves the viewing area, for determining the screen status based on the time ta elapsed from the time the user leaves the viewing area after the release of the pause. This elapsed time ta is measured by the timer 323. The control unit 306 controls the output according to the screen status determined by this processing and, according to the control determined in this way, the video output unit 307 displays the data.

The processing content of the processing L4 is classified into the following three.

When ta satisfies the relation 0≤ta<Tmsg, the screen status is "normal mode".

When ta satisfies the relation Tmsg≤ta<Tmute, the screen status is the state in which the power-saving mode transition message 101 is displayed.

When ta satisfies the relation Tmute≤ta, the screen status is "power-saving mode".

FIG 12B is a diagram showing an example of the processing (processing R4), which is performed when the user returns to the viewing area, for determining the processing content based on the time tu elapsed from the time the user left the viewing area and on the screen status when the user returns to the viewing area. The elapsed time tu is measured by the timer 323. The control unit 306 controls the output according to the processing content determined by this processing and, according to the determined control, the video output unit 307 displays the data.

The processing content of the processing R4 is classified into the following six.

When tu satisfies the relation tu<Tplay and the screen status is "normal mode", no processing is performed and the content reproduction continues.

When tu satisfies the relation Tplay≤tu and the screen status is "normal node", the reproduction position selection message 201 is displayed.

When tu satisfies the relation tu<Tplay and the screen status is the state in which the power-saving mode transition message 101 is displayed, the display of the power-saving mode transition message 101 is terminated.

When tu satisfies the relation Tplay≤tu and the screen status is the state in which the power-saving mode transition message 101 is displayed, the display of the power-saving mode transition message is terminated and the reproduction position selection message 201 is displayed.

When tu satisfies the relation tu<Tplay and the screen status is "power-saving mode", the screen transits to "normal mode".

When tu satisfies the relation Tplay≤tu and the screen status is "power-saving mode", the screen transits to "normal mode" and the reproduction position selection message 201 is displayed.

Providing the condition for Tplay as described above eliminates the need for the user to select the reproduction position when the user leaves, but returns immediately to, the viewing area.

Because the other configuration and effect are similar to those of the processing R1 to R3 in the first to third embodiments, the description is omitted here.

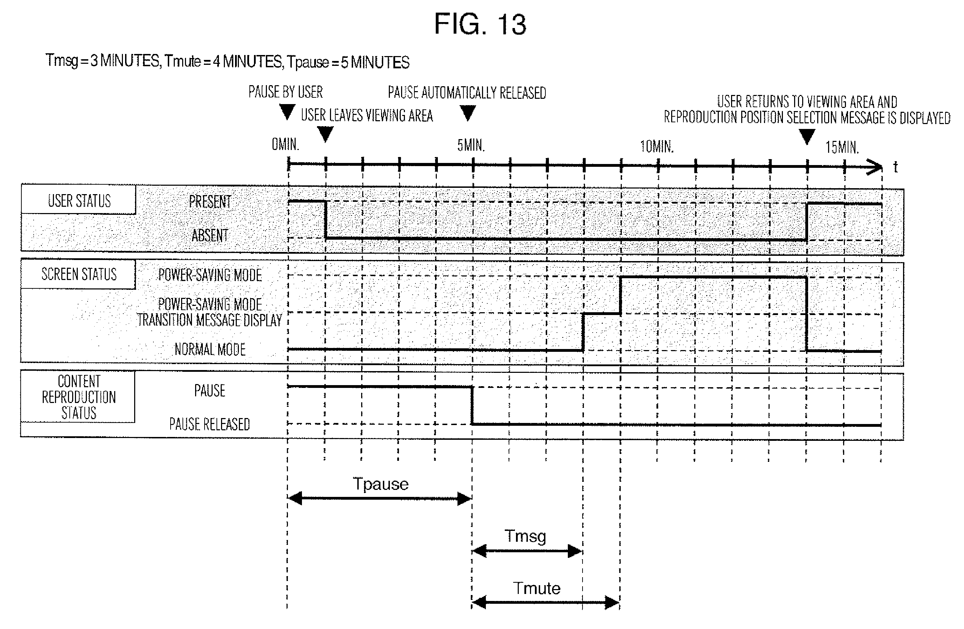

FIG. 13 is a conceptual diagram showing an example of the operation of the content processing device 300 in this embodiment.

In this example, it is assumed that Tmsg = three minutes, Tmute = four minutes, and Tpause = five minutes. The user is in either the present state or the absent state. It is assumed that the user leaves the viewing area at t = one minute, returns to the viewing area at t = fourteen minutes and that the user performs the pause operation at t = zero minute.

The content reproduction status is one of the two: "pause" and "pause released". At t = five minutes that is the time at which Tpause has elapsed after the user performed the pause operation, the pause screen is released automatically.

The screen status is one of the following three: "normal mode", "power-saving mode transition message display", and "power-saving mode". Under the assumption above, the power-saving mode transition message 101 is displayed at t = eight minutes that is the time at which Tmsg has elapsed from the time the pause was released. The screen transits to "power-saving mode" at t = nine minutes that is the time at which Tmute has elapsed from the time the pause was released. In addition, the screen transits to "normal mode" at t = fourteen minutes that is the time at which the user returns to the viewing area.

Because the other configuration and effect are similar to those of the processing in the first to third embodiments, the description is omitted here.

The above-described embodiment achieves the same effect in the content display and output technology as the first to third embodiments.

This embodiment, in which Tmsg and Tmute are measured after- Tpause has elapsed, prevents the backlight-off processing and the brightness reduction processing from being performed even if the screen status is "power-saving mode" during a pause, thus making it possible for the user to better understand the operation of the content processing device 300.

It is to be understood that the embodiments described above are exemplary embodiments for describing the present invention and that the scope of the present invention is not limited to the embodiments. For example, the embodiments are described in detail to make the present invention easy to understand and therefore the described configuration need not always be provided in its entirety. A part of the configuration of one of the embodiments may be replaced by the configuration of any other embodiment, and the configuration of one of the embodiments may be added to the configuration of any other embodiment. It is possible to add another configuration to, or to delete or replace, a part of the configuration of any embodiment.

The configurations, functions, processing units, and processing means may be implemented, in whole or in part, by hardware that is designed using integrated circuits. The configurations and functions described above may also be implemented by software, in which case, the processor interprets and executes the programs each of which implements the respective function. The programs that execute the functions and the information, such as the tables and files, may be stored in the memory, in a recording device such as a hard disk or SSD (Solid state drive), or in a recording medium such as an IC card, an SD card, or a DVD.

Not all control lines and information lines, but only those necessary for the description, are included in the above description. It may be thought that almost all configurations are interconnected.

It should be further understood by those skilled in the art that although the foregoing description has been made on embodiments of the invention, the invention is not limited thereto and various changes and modifications may be made without departing from the spirit of the invention and the scope of the appended claims, interpreted by the description and drawings.

## Claims

1. A content display device (300) comprising:
a content signal input unit (304) that receives a content signal;
a display unit (308, 307, 306) that displays content included in the content signal;
a sensor (321) that detects a presence/absence of a viewer; and
a reproduction position storing unit (324) that stores reproduction position information indicating a reproduction position of the content wherein
when said sensor (321) detects that a viewer leaves, and then returns to, a viewing area, said display unit returns from a current reproduction position to a reproduction position, indicated by the reproduction position information, and displays the content.

2. The content display device (300) according to claim 1 wherein
said display unit displays selection-prompt message prompting a viewer to select whether or not said display unit will return to the reproduction position and reproduce the content and, when instruction information indicating that the display unit will return to the reproduction position and reproduce the content is received, returns to the reproduction position and displays the content, the reproduction position indicated by the reproduction position information.

3. The content display device (300) according to claim 2 wherein
the reproduction position information is information indicating a reproduction position corresponding to a time when the viewer left the viewing area or a reproduction position corresponding to a predetermined time before the time when the viewer left the viewing area.

4. The content display device (300) according to claim 2 wherein
the reproduction position information is information indicating a reproduction position corresponding a time when the content was paused and
when the content was paused, said display unit releases a paused display when a predetermined time has elapsed.

5. The content display device (300) according to claim 2, further comprising:
a timer (323) that measures time; and
a control unit (306) wherein
when said sensor (321) detects that the viewer has left the viewing area, said control unit (306) performs control to switch a display status of said display unit to a power-saving state according to a time measured by said timer (323) and, when said sensor (321) detects that the viewer has returned to the viewing area, performs control depending upon the display status of the display unit.

6. The content display device (300) according to claim 5 wherein
if the display status of said display unit is a power-saving state when said sensor (321) detects that the viewer has returned to the viewing area, said control unit (306) performs control to release the power-saving state.

7. The content display device (300) according to claim 5 wherein
said display unit displays message indicating that the display status will transit to a power-saving state when the display status is switched to a power-saving state and
if the display status of said display unit is a state, in which the message indicating that the display status will transit to the power-saving state is displayed, when said sensor (321) detects that the viewer has returned to the viewing area, said control unit (306) performs control to terminate the display of the message.

8. The content display device (300) according to claim 2 wherein
when the selection-prompt message prompting a viewer to select whether or not said display unit will return to the reproduction position, indicated by the reproduction position information, and reproduce the content is displayed for a predetermined time or longer, said display unit terminates the display of the message.

9. The content display device (300) according to claim 2 wherein
if a time from the time the viewer left the viewing area to the time the viewer returned to the viewing area is longer than a predetermined time when said sensor (321) detects that the viewer has returned to the viewing area, said display unit displays the selection-prompt message.

10. A content display method comprising:
receiving a content signal;
displaying content included in the content signal;
detecting a presence/absence of a viewer via sensor (321);
storing reproduction position information indicating a reproduction position of the content; and
when said sensor (321) detects that a viewer leaves, and then returns to, a viewing area, returning from a current reproduction position to a reproduction position, indicated by the reproduction position information, and displaying the content.

11. The content display method according to claim 10, further comprising:
displaying selection-prompt message prompting a viewer to select whether to return to the reproduction position and reproduce the content and, when instruction information indicating an operation to return to the reproduction position and reproduce the content is received, returning to the reproduction position and displaying the content, the reproduction position indicated by the reproduction position information.
